# EUROPÄISCHE PATENTSCHRIFT

(11) **EP 1 603 213 B1**
(45) Veröffentlichungstag und Bekanntmachung des Hinweises auf die Patenterteilung: **16.11.2011**
(21) Anmeldenummer: 05006524.2
(22) Anmeldetag: 24.03.2005
(51) Int. Cl.: H02K 7/116, E05B 65/12, E05B 47/00, E05F 15/00, B60N 2/16

(54) **Motorische Kraftfahrzeugkomponente**
Motor-drive assembly for a vehicle component
Ensemble moteur pour un composant d'un véhicule

(30) Priorität: 04.06.2004 DE 102004027420
(43) Veröffentlichungstag der Anmeldung: 07.12.2005
(73) Patentinhaber: Brose Schliesssysteme GmbH & Co. KG, 42369 Wuppertal (DE)
(72) Erfinder: Kachouh, Checrallah, 44227 Dortmund (DE); Kothe, Markus, 42553 Velbert (DE)
(74) Vertreter: Gesthuysen, von Rohr & Eggert

(56) Entgegenhaltungen:
- EP-A- 1 030 009
- WO-A-03/054332
- DE-A1- 19 505 779
- US-A1- 2002 119 861

## Beschreibung

Die vorliegende Erfindung betrifft eine motorische Kraftfahrzeugkomponente mit den Merkmalen des Oberbegriffs von Anspruch 1. Vorliegend sind unter dem Begriff "motorische Kraftfahrzeugkomponente" all diejenigen Komponenten eines Kraftfahrzeugs zusammengefaßt, die motorisch auslösbare Funktionen bereitstellen. Beispiele hierfür sind die motorisch auslösbaren Funktionen Zentralverriegelung, Öffnungshilfe, Zuziehhilfe oder mechanische Redundanz eines Kraftfahrzeug-Türschlosses. Es sind aber auch motorische Kraftfahrzeugkomponenten aus anderen Bereichen umfaßt, wie beispielsweise die motorische Betätigungseinrichtung der Klappe, Tür oder Schiebetür, die motorische Sitz- bzw. Sitzhöhenverstellung oder der motorische Fensterheber eines Kraftfahrzeugs.

Alle motorischen Kraftfahrzeugkomponenten weisen einen irgendwie gearteten Antrieb für die Durchführung der motorisch auslösbaren Funktion - also für die Betätigung eines verstellbaren Bauteils - auf, wobei sich der Antrieb wiederum jedenfalls aus einem Motor und einem nachgeschalteten Getriebe zusammengesetzt.

Wesentlich für die sichere Funktion der motorischen Kraftfahrzeugkomponente ist nun, daß der Motor bei entsprechender Bewegungssteuerung die jeweils benötigten mechanischen Zustände des Antriebs möglichst zuverlässig anfährt.

Im Falle eines elektrischen Motors besteht eine Möglichkeit der Bewegungssteuerung darin, den Motor kurz vor Erreichen der gewünschten Stellung kurzzuschließen - Kurzschlußbremsung -. Nachteilig bei dieser Lösung ist die Tatsache, daß in der Regel Sensoren zur Ermittlung der aktuellen Motorstellung notwendig sind und daß die Zuverlässigkeit in Abhängigkeit der jeweiligen Temperatur starken Schwankungen unterlegen ist.

Eine weitaus robustere Möglichkeit besteht darin, den Antrieb dann, wenn die gewünschte Stellung erreicht ist, gegen einen Anschlag laufen zu lassen, so daß der Motor nach einer vorbestimmten Zeitspanne oder nach der Erkennung eines Überstroms von einer übergeordneten Steuerung abgeschaltet werden kann - Blockbetrieb -.

Die bekannte Kraftfahrzeugkomponente (EP 0 811 101 B1), von der die vorliegende Erfindung ausgeht, zeigt eine mögliche Umsetzung des oben beschriebenen Blockbetriebs anhand einer motorischen Öffnungshilfsfanktion für ein Kraftfahrzeug-Türschloß.

Hier handelt es sich um ein Kraftfahrzeug-Türschloß mit einer Drehfalle und einer die Drehfalle in der geschlossenen Stellung haltenden Sperrklinke, wobei die Sperrklinke mittels eines Antriebs in eine die Drehfalle freigebende Stellung aushebbar ist. Hierfür weist der Antrieb ein Stellelement mit einem Mitnehmerzapfen auf, der bei einem Betätigungsvorgang die Sperrklinke in ihre ausgehobene Stellung drückt. Gegen Ende des Betätigungsvorgangs kommt der Mitnehmerzapfen derart in Eingriff mit der Sperrklinke, daß der Motor des Antriebs durch die Sperrklinke blockiert wird, der Motorstrom meßbar ansteigt und der Motor nach einer gewissen Verzögerungszeit abgeschaltet wird. Hier ist es also so, daß die Sperrklinke, also das verstellbare Bauteil, dessen Bewegung vom Antrieb gesteuert werden soll, selbst ein für den Blockbetrieb notwendiges verstellbares Blockierelement bildet. Allein diese Tatsache führt zu ungewünschten konstruktiven Einschränkungen bei der Realisierung der Sperrklinke. Dies ist insofern besonders nachteilig, wenn man bedenkt, daß es bei den geforderten hohen Aushebegeschwindigkeiten der Sperrklinke insbesondere auf die optimale Abstimmung zwischen der auf die Sperrklinke wirkenden Rückstellfederkraft und dem Sperrklinkengewicht sowie der entsprechenden Gewichtsverteilung ankommt. Aber auch im Hinblick auf die ständige Forderung nach Erhöhung der Kompaktheit motorischer Kraftfahrzeugkomponenten sind derartige konstruktive Randbedingungen unvorteilhaft.

Schließlich ist die bekannte Konstruktion insofern nachteilig, als die hohe Blockierkraft bzw. das hohe Blockiermoment zu einem ungewünschten Anschlaggeräusch führt, das im allgemeinen als Komforteinbuße gesehen wird.

Die hohe Blockierkraft führt ferner dazu, daß das Material von Stellelement und Sperrklinke sowie die entsprechenden Getriebeübersetzungen besonders massiv auszuführen sind. Darin ist eine weitere ungewünschte konstruktive Beschränkung zu sehen.

Der vorliegenden Erfindung liegt das Problem zugrunde, die bekannte motorische Kraftfahrzeugkomponente derart auszugestalten und weiterzubilden, daß die konstruktiven Beschränkungen für die Realisierung bei gleichzeitiger Steigerung der Leistungsfähigkeit minimiert werden.

Das oben genannte Problem wird bei einem Kraftfahrzeug-Türschloß mit den Merkmalen des Oberbegriffs von Anspruch 1 durch die Merkmale des kennzeichnenden Teils von Anspruch 1 gelöst.

Wesentlich ist zunächst die Tatsache, daß das verstellbare Blockierelement zusätzlich zu dem Antrieb und dem verstellbaren Bauteil vorgesehen ist. Mit "zusätzlich" ist hier gemeint, daß das Blockierelement ausdrücklich nicht Bestandteil des Antriebs oder des verstellbaren Bauteils ist, so daß Antrieb und verstellbares Bauteil - jedenfalls in einem weiten Bereich - unabhängig vom Blockierelement konstruiert werden können.

Dieses zusätzlich vorgesehene Blockierelement steht nun in steuerndem Eingriff mit einem ersten Übertragungsglied der kinematischen Kette des Getriebes, wodurch das Blockierelement in blockierenden Eingriff mit einem zweiten Übertragungsglied der kinematischen Kette des Getriebes bringbar ist. Damit ist es einerseits möglich, durch geeignete Auswahl des ersten Übertragungsglieds eine optimale Steuerung des Blockierelements zur sicheren und schnellen Einnahme der blockierenden Stellung zu gewährleisten. Andererseits stellt die geeignete Auswahl des zweiten Übertragungsglieds eine optimale Blockierwirkung sicher. In der Regel ist es als optimal anzusehen, wenn das erste Übertragungsglied mit vergleichsweise hohem Drehmoment beaufschlagt ist, um die Verstellbewegung des Blockierelements sicherzustellen und wenn das zweite Übertragungsglied mit vergleichsweise geringem Drehmoment beaufschlagt ist, so daß das resultierende Blockiermoment sowie die resultierende Blockierkraft gering sind. Dies führt zu geringen Anschlaggeräuschen sowie der Möglichkeit der "schwachen" Auslegung der entsprechenden mechanischen Komponenten.

Eine optimale Auslegung hinsichtlich der Steuer- und Blockierkräfte bringen die Patentansprüche 10 und 11 mit sich. Die Ausgestaltung der Steuerkontur gemäß Anspruch 10 führt zu optimalen Hebelverhältnissen für eine möglichst hohe Steuerkraft, während die Anordnung des Anschlags gemäß Anspruch 11 möglichst weit außen am zweiten Übertragungsglied eine geringe Blockierkraft garantiert.

Es darf ausdrücklich darauf hingewiesen werden, daß die erfindungsgemäße Lösung für alle denkbaren motorischen Kraftfahrzeugkomponenten vorgesehen ist. Beispiele hierfür wurden eingangs bereits genannt.

Im folgenden wird die Erfindung anhand einer lediglich ein Ausführungsbeispiel darstellenden Zeichnung näher erläutert. In der Zeichnung zeigt
- Fig. 1: eine motorische Kraftfahrzeugkomponente in einer ersten Blokkierstellung in der Draufsicht,
- Fig. 2: die Kraftfahrzeugkomponente gemäß Fig. 1 im nicht blockierenden Zustand,
- Fig. 3: die Kraftfahrzeugkomponente gemäß Fig. 1 in einer zweiten Blockierstellung,
- Fig. 4: das Blockierelement der Kraftfahrzeugkomponente gemäß Fig. 1 mit einer Führung des Gegenanschlags,
- Fig. 5: eine Schnittansicht entlang der Linie V-V gemäß Fig. 4.

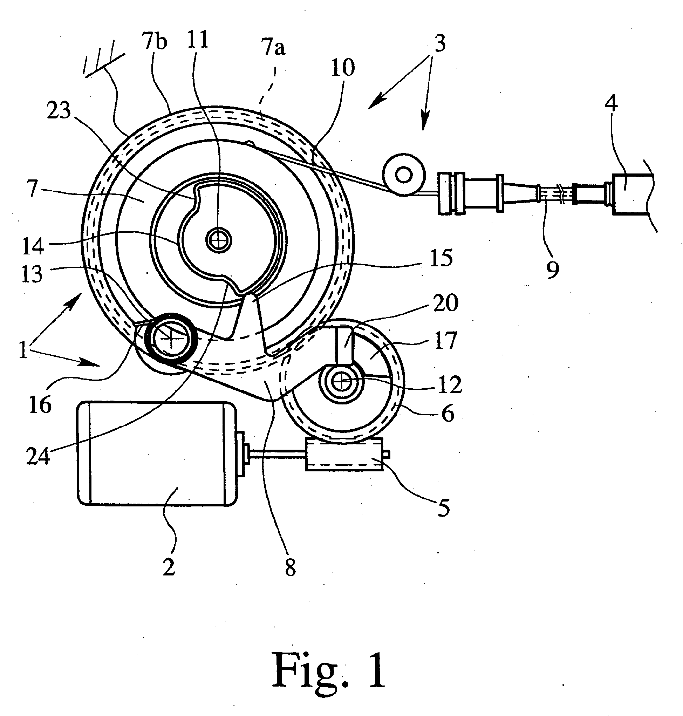

Die in Fig. 1 dargestellte motorische Kraftfahrzeugkomponente zeigt einen Antrieb 1 bestehend aus einem Motor 2 und einem Getriebe 3 sowie ein mittels des Antriebs 1 verstellbares Bauteil 4. Das Getriebe 3 weist wie üblich eine Antriebs- und eine Abtriebsseite auf, wobei der Motor 2 antriebstechnisch mit der Antriebsseite des Getriebes 3 gekoppelt ist. Die Abtriebsseite des Getriebes 3 ist antriebstechnisch mit dem verstellbaren Bauteil 4 gekoppelt. Durch die Verkettung des Motors 2 über das Getriebe 3 bis hin zum verstellbaren Bauteil 4 läßt sich das verstellbare Bauteil 4 entsprechend seiner Funktionalität antreiben.

Je nachdem, welche Funktionalität von der Kraftfahrzeugkomponente bereitgestellt werden soll, handelt es sich bei dem verstellbaren Bauteil 4 um einen Hebel, ein weiteres Getriebe, o. dgl. Aus dem Stand der Technik sind hierfür zahlreiche Varianten bekannt.

Im vorliegenden Ausführungsbeispiel verläuft die kinematische Kette des Getriebes 3 von der mit dem Motor 2 verbundenen Schnecke 5 über das Schnekkenrad 6, weiter über ein Sonnenrad 7a bis hin zum Planetenradträger 7 eines Planetengetriebes. Das Planetengetriebe weist ein feststehendes Hohlrad 7b auf. Der Planetenradträger 7 stellt gewissermaßen die Abtriebsseite des Getriebes 3 bereit und wird im folgenden auch als Stellelement 7 bezeichnet.

Die kinematische Kette des Getriebes 3 weist also die vier Übertragungsglieder Schnecke 5, Schneckenrad 6, Sonnenrad 7a und Planetenradträger 7 auf. In Abhängigkeit von den geltenden Randbedingungen kann es aber auch vorteilhaft sein, lediglich zwei Übertragungsglieder, oder aber mehr als vier Übertragungsglieder vorzusehen. Diese Randbedingungen werden im wesentlichen von dem verstellbaren Bauteil 4 vorgegeben.

Es ist weiter ein verstellbares Blockierelement 8 vorgesehen, das in blockierenden Eingriff mit dem Antrieb 1 bringbar ist. Damit ist der Antrieb 1 im Blockbetrieb betreibbar.

Im dargestellten Ausführungsbeispiel ist das verstellbare Bauteil 4 über einen Bowdenzug 9 mit einer Seele 10 mit der Abtriebsseite des Getriebes 3 gekoppelt. Die Seele 10 wird dabei auf das Stellelement 7 aufgerollt bzw. vom Stellelement 7 abgerollt. Es darf aber darauf hingewiesen werden, daß zur Kopplung des verstellbaren Bauteils 4 mit der Abtriebsseite des Getriebes 3 zahlreiche Varianten aus dem Stand der Technik bekannt sind.

Es ist Fig. 1 zu entnehmen, daß das Blockierelement 8 als "zusätzliches" Blockierelement 8 in obigem Sinne mit den genannten resultierenden Vorteilen ausgestaltet ist. Aus Fig. 1 wird insbesondere deutlich, daß die Ausgestaltung des verstellbaren Bauteils 4 völlig unabhängig ist von der konstruktiven Umsetzung des Blockbetriebs. Ferner ist zu beachten, daß auch ein besonders großer Konstruktionsspielraum bei der Realisierung des Blockierelements 8 selbst besteht, da nunmehr frei gewählt werden kann, an welchen Stellen des Antriebs 1 das Blockierelement 8 in steuernden und in blockierenden Eingriff bringbar sein soll.

Die oben genannten Vorzüge lassen sich dann voll ausschöpfen, wenn, wie im dargestellten Ausführungsbeispiel gezeigt, das Blockierelement 8 in steuerndem Eingriff mit einem ersten Übertragungsglied 7 der kinematischen Kette des Getriebes 3 steht und dadurch in Abhängigkeit von der Stellung des ersten Übertragungsglieds 7 in blockierenden Eingriff mit einem zweiten Übertragungsglied 6 der kinematischen Kette bringbar ist. Im dargestellten und insoweit bevorzugten Ausführungsbeispiel ist das erste - steuernde - Übertragungsglied das Stellelement 7, während das zweite - blockierende - Übertragungsglied das Schneckenrad 6 ist.

Mit dem oben beschriebenen Konzept ist es möglich, bei der Konstruktion zunächst die Übertragungsglieder als optimale erste und zweite Übertragungsglieder in obigem Sinne zu identifizieren und schließlich ein Blockierelement 8 als "zusätzliches" Blockierelement 8 zu entwerfen.

Besonders vorteilhaft ist es, wenn die Übertragungsglieder des Getriebes 3 derart ausgestaltet sind, daß das am zweiten - blockierenden - Übertragungsglied 6 anliegende Drehmoment vergleichsweise gering ist und dadurch das resultierende Blockiermoment entsprechend ebenfalls gering ist. Im vorliegend dargestellten Ausführungsbeispiel läßt sich dieses Drehmoment über den Durchmesser des Schneckenrads 6 variieren. Die Angabe "vergleichsweise gering" ist vorliegend relativ zu den übrigen Übertragungsgliedern des Getriebes 3 zu verstehen.

Das Umgekehrte gilt für das erste Übertragungsglied 7, das in steuerndem Eingriff mit dem Blockierelement 8 steht. Hier ist es besonders vorteilhaft, wenn das am ersten Übertragungsglied 7 anliegende Drehmoment vergleichsweise groß ist, um eine sichere und schnelle Verstellung des Blockierelements 8 zu gewährleisten.

Bei einem drehmomentübersetzenden Getriebe 3 bedeutet dies optimalerweise, daß das erste Übertragungsglied 7 im wesentlichen unmittelbar mit dem verstellbaren Bauteil 4 und das zweite Übertragungsglied 6 im wesentlichen unmittelbar mit dem Motor 2 gekoppelt ist. Hiermit ist gemeint, daß das erste Übertragungsglied 7 mit einem möglichst hohen Drehmoment und das zweite Übertragungselement 6 mit einem möglichst niedrigen Drehmoment beaufschlagt ist. Dies führt zu den oben genannten Vorzügen.

Das erste Übertragungsglied 7 einerseits und das zweite Übertragungsglied 6 andererseits sind im dargestellten und insoweit bevorzugten Ausführungsbeispiel um die Drehachsen 11, 12 drehbar ausgestaltet, wobei die beiden Drehachsen 11, 12 vorzugsweise zueinander parallel ausgerichtet sind. Dies führt zu einer besonders kompakten Anordnung. Es kann sich bei den beiden Übertragungsgliedern 6, 7 auch um lediglich schwenkbare Hebel o. dgl. handeln.

Das Blockierelement 8 ist um eine Schwenkachse 13 schwenkbar ausgestaltet, wobei es aber auch vorteilhaft sein kann, das Blockierelement 8 um eine Drehachse drehbar auszugestalten.

Eine besonders kompakte Anordnung ergibt sich dann, wenn alle Schwenk- bzw. Drehachsen 11, 12, 13 der Übertragungsglieder 6, 7 sowie des Blockierelements 8 parallel zueinander ausgerichtet sind. Insbesondere läßt sich dadurch eine sehr flache Anordnung erreichen.

Das erste Übertragungsglied 7, also vorliegend das Stellelement 7, weist eine Steuerkontur 14 auf, die mit dem Blockierelement 8 in steuerndem Eingriff steht. Hierfür ist das Blockierelement 8 mit einer Tastnase 15 ausgestattet. In einer bevorzugten Ausgestaltung ist das Blockierelement 8 derart federbelastet, daß die Tastnase 15 gegen die Steuerkontur 14 gedrückt wird. Im vorliegenden Ausführungsbeispiel ist hierfür eine Feder 16 vorgesehen.

Während im dargestellten Ausführungsbeispiel das Stellelement 7 im wesentlichen scheibenförmig ausgestaltet ist, wobei die Steuerkontur 14 stirnseitig angeordnet ist, kann es auch vorteilhaft sein, daß das erste Übertragungsglied 7 walzenförmig o. dgl. mit einer ggf. ebenfalls stirnseitigen Steuerkontur ausgestaltet ist.

Um eine möglichst sichere Steuerung der Verstellung des Blockierelements 8 zu erreichen, ist die Steuerkontur 14 möglichst nahe der Drehachse 11 des ersten Übertragungsglieds 7 angeordnet. Dies führt zu optimalen Hebelverhältnissen bei der steuernden Kraftübertragung vom ersten Übertragungsglied 7 auf das Blockierelement 8.

Das zweite Übertragungsglied 6, also vorliegend das Schneckenrad 6, weist einen Anschlag 17 mit den Anschlagflächen 18, 19 auf, der für den Blockbetrieb mit einem am Blockierelement 8 angeordneten Gegenanschlag 20 mit entsprechenden Gegenanschlagflächen 21, 22 in blockierenden Eingriff bringbar ist.

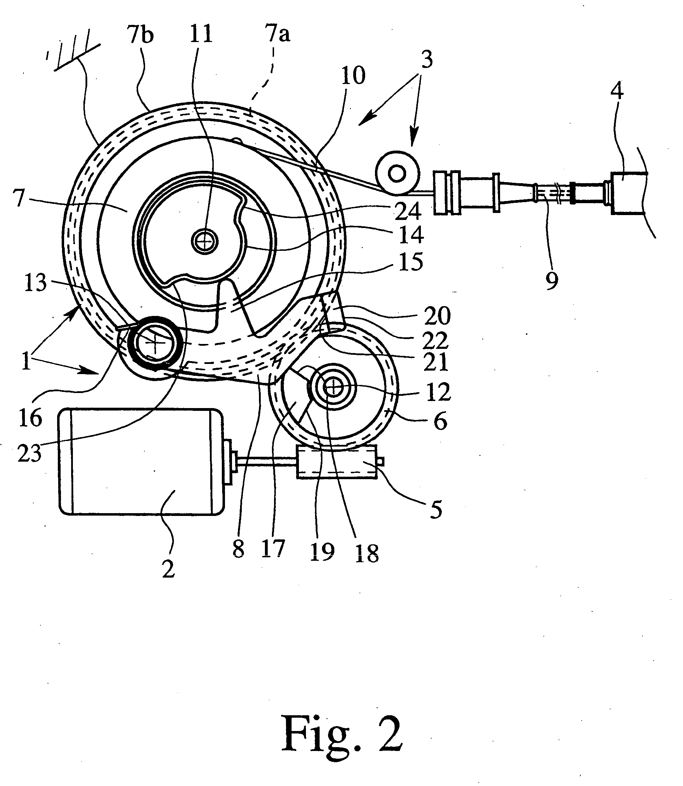

Ausgehend von der Darstellung in Fig. 2 läßt sich der Bewegungsablauf der vorliegenden Kraftfahrzeugkomponente verdeutlichen. Zunächst ist festzustellen, daß die vorliegenden Kraftfahrzeugkomponente im Normalbetrieb in zwei Endzustände bringbar ist, die durch die bidirektionale Ansteuerung des Motors 2 erreichbar sind.

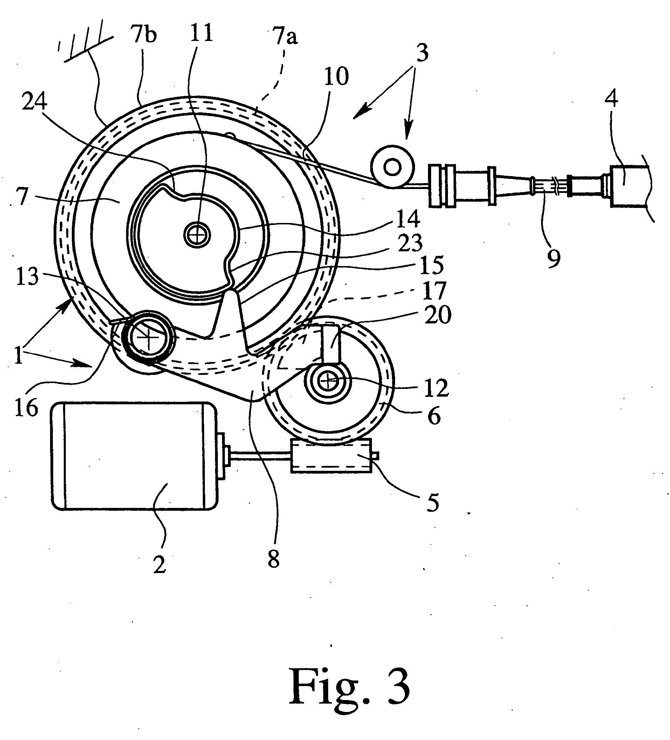

Fig. 2 zeigt eine Zwischenstellung, in der die Seele 10 des Bowdenzugs 9 auf- oder abgewickelt wird. Wird nun ausgehend von Fig. 2 das Schneckenrad 6 durch den Motor 2 rechtsherum angetrieben, so dreht sich das Stellelement 7 linksherum. Die Steuerkontur 14 läuft dabei entlang der Tastnase 15 des Blockierelements 8, bis eine erste Flanke 23 der Steuerkontur 14 die Tastnase 15 erreicht und das Blockierelement 8 rechtsherum verstellt. Dadurch gelangt die erste Gegenanschlagfläche 21 des Blockierelements 8 in die Bewegungsbahn der ersten Anschlagfläche 18 des Schneckenrads 6. Damit ist ein Endzustand der Kraftfahrzeugkomponente im Blockbetrieb erreicht (Fig. 3).

Wird nun das Schneckenrad 6 ausgehend von dem in Fig. 3 dargestellten Endzustand durch den Motor 2 linksherum angetrieben, so dreht sich das Stellelement 7 rechtsherum und das Blockierelement 8 wird wieder aus der Blokkierstellung herausgefahren, sobald die erste Flanke 23 der Steuerkontur 14 die Tastnase 15 des Blockierelements 8 passiert hat. Schließlich kommt eine zweite Flanke 24 der Steuerkontur 14 in Eingriff mit der Tastnase 15 des Blockierelements 8 und drückt die zweite Gegenanschlagfläche 22 des Blokkierelements 8 in die Bewegungsbahn der zweiten Anschlagfläche 19 des Schneckenrads 6. Dadurch wird der Antrieb 1 wiederum blockiert und der andere Endzustand der Kraftfahrzeugkomponente ist erreicht (Fig. 1).

In der Zeichnung ist eine besondere Ausgestaltung des am Schneckenrad 6 angeordneten Anschlags 17 derart vorgesehen, daß der Anschlag 17 stirnseitig des im wesentlichen scheibenförmigen Schneckenrads 6 möglichst weit außen angeordnet ist. Dies ist eine Maßnahme, um die Blockierkraft so weit wie möglich zu minimieren.

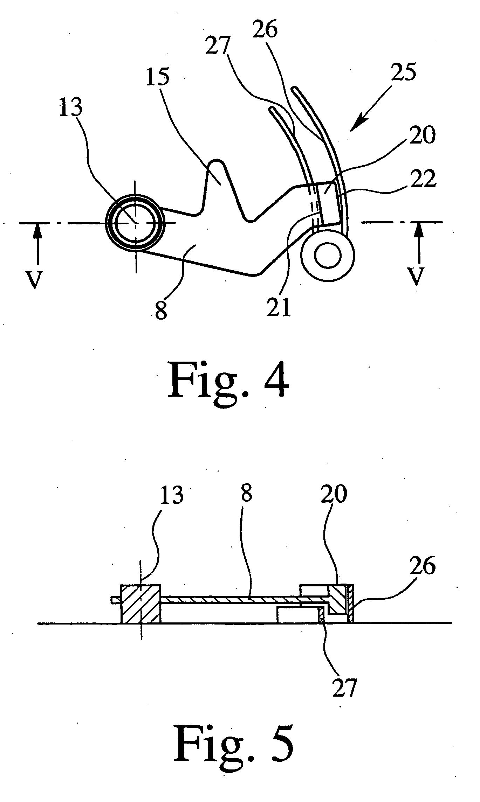

Eine weitere besonders vorteilhafte Ausgestaltung der Kraftfahrzeugkomponenten ist in den Fig. 4 und 5 dargestellt. Fig. 4 zeigt eine Führung 25 mit Führungsflächen 26, 27, in der der Gegenanschlag 20 - vorzugsweise erst nach der Verstellung des Blockierelements 8 in die Blockierstellung - geführt ist. Damit wird erreicht, daß die Blockierkraft jedenfalls teilweise von der Führung 25 und nicht vom Blockierelement 8 im übrigen aufgenommen wird. Damit läßt sich erreichen, daß das Blockierelement 8 besonders "schwach" ausgeführt werden kann. In besonders bevorzugter Ausgestaltung nimmt die Führung 25 im wesentlichen die gesamte Blockierkraft über den Gegenanschlag 20 des Blockierelements 8 auf. Eine Seitenansicht dieser Führungen zeigt Fig. 5.

Es wurde bereits darauf hingewiesen, daß sich die Erfindung auf alle denkbaren motorischen Kraftfahrzeugkomponenten bezieht. Vor diesem Hintergrund kann das verstellbare Bauteil 4 beispielsweise der verstellbare Schließkeil bzw. Schließbügel oder die verstellbare Drehfalle der Zuziehhilfe eines Kraftfahrzeug-Türschlosses sein, der Zentralverriegelungshebel der Zentralverriegelungseinrichtung eines Kraftfahrzeug-Türschlosses oder die Sperrklinke eines Kraftfahrzeug-Türschlosses. Weiter ist es denkbar, daß das verstellbare Bauteil 4 ein Steuerelement der mechanischen Redundanz eines Elektroschlosses, ein Antriebselement einer motorisch angetriebenen Kraftfahrzeugtür oder -klappe oder ein Kupplungselement zwischen zwei oder mehreren Kraftfahrzeugmodulen ist. Im letztgenannten Fall kann es beispielsweise sein, daß eines der Kraftfahrzeugmodule ein Antrieb ist, der über das Kupplungselement auf mehrere "Verbraucher" aufgeschaltet werden kann. Derartige Verbraucher sind beispielsweise der Fensterheber oder die motorische Klappenbetätigung eines Kraftfahrzeugs.

Das verstellbare Bauteil 4 kann schließlich ein Antriebs- oder Steuerelement eines motorisch angetriebenen Fensterhebers oder einer motorisch angetriebenen Sitz- bzw. Sitzhöhenverstellung sein.

Es darf darauf hingewiesen werden, daß alle oben angegebenen beispielhaften Erläuterungen nicht beschränkend zu verstehen sind. Beispielsweise sind unter dem Begriff "Kraftfahrzeugtür" alle denkbaren Arten von Kraftfahrzeugtüren, auch Schiebetüren, zusammengefaßt.

## Patentansprüche

1. Motorische Kraftfahrzeugkomponente mit einem Antrieb (1) bestehend aus einem Motor (2) und einem Getriebe (3) sowie mit einem mittels des Antriebs (1) verstellbaren Bauteil (4), wobei das Getriebe (3) eine Antriebs- und eine Abtriebsseite aufweist, wobei der Motor (2) antriebstechnisch mit der Antriebsseite des Getriebes (3) gekoppelt ist und wobei die Abtriebsseite des Getriebes (3) antriebstechnisch mit dem verstellbaren Bauteil (4) gekoppelt ist, wobei die kinematische Kette des Getriebes (3) zwischen der Antriebsseite und der Abtriebsseite mindestens zwei Übertragungsglieder (6, 7) aufweist, wobei der Antrieb (1) im Blockbetrieb betreibbar ist und hierfür ein verstellbares Blockierelement (8) in blockierenden Eingriff mit dem Antrieb (1) bringbar ist,
**dadurch gekennzeichnet,**
**daß** das verstellbare Blockierelement (8) zusätzlich zu dem Antrieb (1) und dem verstellbaren Bauteil (4) vorgesehen ist, daß das Blockierelement (8) in steuerndem Eingriff mit einem ersten Übertragungsglied (7) der kinematischen Kette steht und daβ das Blockierelement (8) dadurch in Abhängigkeit von der Stellung des ersten Übertragungsglieds (7) in blockierenden Eingriff mit einem zweiten Übertragungsglied (6) der kinematischen Kette bringbar ist.

2. Kraftfahrzeugkomponente nach Anspruch 1, **dadurch gekennzeichnet, daß** das Getriebe (3) eine Schneckenradgetriebestufe und eine nachgeschaltete Planetengetriebestufe aufweist, daß das erste Übertragungsglied (7) der Planetenradträger (7) der Planetengetriebestufe ist und daß das zweite Übertragungsglied (6) das Schneckenrad (6) der Schneckenradgetriebestufe ist.

3. Kraftfahrzeugkomponente nach Anspruch 1 oder 2, **dadurch gekennzeichnet, daß** die Übertragungsglieder derart ausgestaltet sind, daß das am zweiten Übertragungsglied (6) anliegende Drehmoment vergleichsweise gering ist und **dadurch** das resultierende Blockiermoment entsprechend gering ist.

4. Kraftfahrzeugkomponente nach einem der vorhergehenden Ansprüche, **dadurch gekennzeichnet, daß** die Übertragungsglieder (6, 7) derart ausgestaltet sind, daß das am ersten Übertragungsglied (7) anliegende Drehmoment vergleichsweise groß ist.

5. Kraftfahrzeugkomponente nach einem der vorhergehenden Ansprüche, **dadurch gekennzeichnet, daß** das erste Übertragungsglied (7) im wesentlichen unmittelbar mit dem verstellbaren Bauteil (4) und das zweite Übertragungsglied (6) im wesentlichen unmittelbar mit dem Motor (2) gekoppelt ist.

6. Kraftfahrzeugkomponente nach einem der vorhergehenden Ansprüche, **dadurch gekennzeichnet, daß** das erste Übertragungsglied (7) und das zweite Übertragungsglied (6) jeweils um eine Schwenk- oder Drehachse (11, 12) schwenkbar oder drehbar ausgestaltet sind und, vorzugsweise, daß die beiden Schwenk- oder Drehachsen (11, 12) zueinander parallel ausgerichtet sind.

7. Kraftfahrzeugkomponente nach einem der vorhergehenden Ansprüche, **dadurch gekennzeichnet, daß** das Blockierelement (8) um eine Schwenk- oder Drehachse (13) schwenkbar oder drehbar ausgestaltet ist.

8. Kraftfahrzeugkomponente nach den Ansprüchen 6 und 7, **dadurch gekennzeichnet, daß** die Schwenk- bzw. Drehachse (13) des Blockierelements (8) parallel zu den Schwenk- bzw. Drehachsen (11, 12) des ersten und zweiten Übertragungsglieds (6, 7) sind.

9. Kraftfahrzeugkomponente nach einem der vorhergehenden Ansprüche, **dadurch gekennzeichnet, daß** das erste Übertragungsglied (7) eine Steuerkontur (14) aufweist, die mit dem Blockierelement (8) in steuerndem Eingriff steht, vorzugsweise, daß das Blockierelement (8) für den sicheren Eingriff mit der Steuerkontur (14) federbelastet ist.

10. Kraftfahrzeugkomponente nach Anspruch 9, **dadurch gekennzeichnet, daß** das erste Übertragungsglied (7) im wesentlichen scheibenförmig ausgestaltet ist und daß die Steuerkontur (14) stirnseitig möglichst nahe der Schwenk- bzw. Drehachse (11) des ersten Übertragungsglieds (7) angeordnet ist.

11. Kraftfahrzeugkomponente nach einem der vorhergehenden Ansprüche, **dadurch gekennzeichnet, daß** das zweite Übertragungsglied (6) mindestens einen Anschlag (17) aufweist, der für den Blockbetrieb mit einem am Blockierelement (8) angeordneten Gegenanschlag (20) in blockierenden Eingriff bringbar ist, vorzugsweise, daß das zweite Übertragungsglied (6) im wesentlichen scheibenförmig ausgestaltet ist und daß der Anschlag (17) des zweiten Übertragungsglieds (6) stirnseitig möglichst weit außen angeordnet ist.

12. Kraftfahrzeugkomponente nach Anspruch 11, **dadurch gekennzeichnet, daß** eine Führung (25) für den Gegenanschlag (20) des Blockierelements (8) zur Aufnahme der Blockierkraft vorgesehen ist, vorzugsweise, daß die Führung (25) derart ausgestaltet ist, daß sie im wesentlichen die gesamte Blokkierkraft über den Gegenanschlag (20) aufnimmt.

13. Kraftfahrzeugkomponente nach einem der vorhergehenden Ansprüche, **dadurch gekennzeichnet, daß** das verstellbare Bauteil der verstellbare Schließkeil bzw. Schließbügel oder die Drehfalle der Zuziehhilfe eines Kraftfahrzeug-Türschlosses ist, der Zentralverriegelungshebel der Zentralverriegelungseinrichtung eines Kraftfahrzeug-Türschlosses, die Sperrklinke eines Kraftfahrzeug-Türschlosses, ein Steuerelement der mechanischen Redundanz eines Elektroschlosses, ein Antriebselement einer motorisch angetriebenen Kraftfahrzeugtür oder -klappe oder ein Kupplungselement der Kupplung zwischen zwei oder mehreren Kraftfahrzeugmodulen ist.

14. Kraftfahrzeugkomponente nach einem der Ansprüche 1 bis 12, **dadurch gekennzeichnet, daß** das verstellbare Bauteil (4) ein Antriebs- oder Steuerelement eines motorisch angetriebenen Fensterhebers oder einer motorisch angetriebenen Sitz- bzw. Sitzmöbelverstellung ist.

## Claims

1. Motor-driven motor vehicle component, having a drive (1) consisting of a motor (2) and a mechanism (3) and also having a component (4) that can be adjusted by means of the drive (1), the mechanism (3) having a drive input side and a drive output side, the motor (2) being coupled in terms of drive to the drive input side of the mechanism (3), and the drive output side of the mechanism (3) being coupled in terms of drive to the adjustable component (4), the kinematic chain of the mechanism (3) between the drive input side and the drive output side having at least two transmission members (6, 7), it being possible for the drive (1) to be operated in a blocking mode and, for this purpose, it being possible for an adjustable blocking element (8) to be placed in blocking engagement with the drive (1),
**characterized**
**in that** the adjustable blocking element (8) is provided in addition to the drive (1) and the adjustable component (4), in that the blocking element (8) is in controlling engagement with a first transmission member (7) of the kinematic chain, and in that the blocking element (8) can thereby be placed, as a function of the position of the first transmission member (7), into blocking engagement with a second transmission member (6) of the kinematic chain.

2. Motor vehicle component according to Claim 1, **characterized in that** the mechanism (3) has a worm gear mechanism stage and a downstream planetary gear set stage, **in that** the first transmission member (7) is the planet gear carrier (7) of the planetary gear set stage, and **in that** the second transmission member (6) is the worm gear (6) of the worm gear mechanism stage.

3. Motor vehicle component according to Claim 1 or 2, **characterized in that** the transmission members are designed such that the torque acting on the second transmission member (6) is relatively low, and in this way, the resulting blocking moment is correspondingly low.

4. Motor vehicle component according to one of the preceding claims, **characterized in that** the transmission members (6, 7) are designed such that the torque acting on the first transmission member (7) is relatively high.

5. Motor vehicle component according to one of the preceding claims, **characterized in that** the first transmission member (7) is substantially directly coupled to the adjustable component (4) and the second transmission member (6) is substantially directly coupled to the motor (2).

6. Motor vehicle component according to one of the preceding claims, **characterized in that** the first transmission member (7) and the second transmission member (6) are designed to be pivotable or rotatable in each case about a pivot or rotation axis (11, 12), and preferably **in that** the two pivot or rotation axes (11, 12) are aligned parallel to one another.

7. Motor vehicle component according to one of the preceding claims, **characterized in that** the blocking element (8) is designed to be pivotable or rotatable about a pivot or rotation axis (13).

8. Motor vehicle component according to Claims 6 and 7, **characterized in that** the pivot or rotation axis (13) of the blocking element (8) is parallel to the pivot or rotation axes (11, 12) of the first and second transmission members (6, 7).

9. Motor vehicle component according to one of the preceding claims, **characterized in that** the first transmission member (7) has a control contour (14) which is in controlling engagement with the blocking element (8), preferably **in that** the blocking element (8) is spring-loaded for secure engagement with the control contour (14).

10. Motor vehicle component according to Claim 9, **characterized in that** the first transmission member (7) is of substantially disc-shaped design and **in that** the control contour (14) is arranged at the face side as close as possible to the pivot or rotation axis (11) of the first transmission member (7).

11. Motor vehicle component according to one of the preceding claims, **characterized in that** the second transmission member (6) has at least one stop (17) which, for the blocking mode, can be placed in blocking engagement with a counterpart stop (20) arranged on the blocking element (8), preferably **in that** the second transmission member (6) is of substantially disc-shaped design and **in that** the stop (17) of the second transmission member (6) is arranged at the face side as far to the outside as possible.

12. Motor vehicle component according to Claim 11, **characterized in that** a guide (25) for the counterpart stop (20) of the blocking element (8) is provided for absorbing the blocking force, preferably **in that** the guide (25) is designed so as to absorb substantially the entire blocking force via the counterpart stop (20) .

13. Motor vehicle component according to one of the preceding claims, **characterized in that** the adjustable component is the adjustable striker wedge or striker bracket or the rotary catch of the closing aid of a motor vehicle door lock, the central latching lever or the central latching device of a motor vehicle door lock, the pawl of a motor vehicle door lock, a control element of the mechanical redundancy of an electric lock, a drive element of a motor-driven motor vehicle door or flap, or a coupling element of the coupling between two or more motor vehicle modules.

14. Motor vehicle component according to one of Claims 1 to 12, **characterized in that** the adjustable component (4) is a drive or control element of a motor-driven window lifter or of a motor-driven seat or seating furniture adjustment means.

## Revendications

1. Ensemble de véhicule automobile à moteur, comprenant un entraînement (1) constitué d'un moteur (2) et d'une transmission (3) ainsi que d'un composant (4) réglable au moyen de l'entraînement (1), la transmission (3) présentant un côté d'entraînement et un côté de prise de force, le moteur (2) étant accouplé par une technique d'entraînement au côté d'entraînement de la transmission (3), et le côté de prise de force de la transmission (3) étant accouplé par une technique d'entraînement au composant réglable (4), la chaîne cinématique de la transmission (3) présentant, entre le côté d'entraînement et le côté de prise de force, au moins deux organes de transfert (6, 7), l'entraînement (1) pouvant fonctionner en mode de blocage et à cet effet, un élément de blocage réglable (8) pouvant être amené en prise de blocage avec l'entraînement (1),
**caractérisé en ce que**
l'élément de blocage réglable (8) est prévu en plus de l'entraînement (1) et du composant réglable (4), **en ce que** l'élément de blocage (8) est en prise de commande avec un premier organe de transfert (7) de la chaîne cinématique et **en ce que** l'élément de blocage (8) peut de ce fait être amené en prise de blocage avec un deuxième organe de transfert (6) de la chaîne cinématique en fonction de la position du premier organe de transfert (7).

2. Ensemble de véhicule automobile selon la revendication 1, **caractérisé en ce que** la transmission (3) présente un étage de transmission à roue à denture hélicoïdale et un étage de transmission planétaire monté en aval, **en ce que** le premier organe de transfert (7) est le porte-satellites (7) de l'étage de transmission planétaire et **en ce que** le deuxième organe de transfert (6) est la roue à denture hélicoïdale (6) de l'étage de transmission à roue à denture hélicoïdale.

3. Ensemble de véhicule automobile selon la revendication 1 ou 2, **caractérisé en ce que** les organes de transfert sont configurés de telle sorte que le couple s'appliquant sur le deuxième organe de transfert (6) soit relativement faible et que de ce fait le couple de blocage résultant soit faible en conséquence.

4. Ensemble de véhicule automobile selon l'une quelconque des revendications précédentes, **caractérisé en ce que** les organes de transfert (6, 7) sont configurés de telle sorte que le couple s'appliquant au premier organe de transfert (7) soit relativement grand.

5. Ensemble de véhicule automobile selon l'une quelconque des revendications précédentes, **caractérisé en ce que** le premier organe de transfert (7) est accouplé directement au composant réglable (4) et le deuxième organe de transfert (6) est accouplé essentiellement directement au moteur (2).

6. Ensemble de véhicule automobile selon l'une quelconque des revendications précédentes, **caractérisé en ce que** le premier organe de transfert (7) et le deuxième organe de transfert (6) sont configurés à chaque fois de manière pivotante ou rotative autour d'un axe de pivotement ou de rotation (11, 12), et de préférence **en ce que** les deux axes de pivotement ou de rotation (11, 12) sont orientés parallèlement l'un à l'autre.

7. Ensemble de véhicule automobile selon l'une quelconque des revendications précédentes, **caractérisé en ce que** l'élément de blocage (8) est configuré de manière à pouvoir pivoter ou tourner autour d'un axe de pivotement ou de rotation (13).

8. Ensemble de véhicule automobile selon les revendications 6 et 7, **caractérisé en ce que** l'axe de pivotement ou de rotation (13) de l'élément de blocage (8) est parallèle à l'axe de pivotement ou de rotation (11, 12) du premier et du deuxième organe de transfert (6, 7).

9. Ensemble de véhicule automobile selon l'une quelconque des revendications précédentes, **caractérisé en ce que** le premier organe de transfert (7) présente un contour de commande (14) qui est en prise de commande avec l'élément de blocage (8), de préférence **en ce que** l'élément de blocage (8) est sollicité par ressort pour l'engagement sûr avec le contour de commande (14).

10. Ensemble de véhicule automobile selon la revendication 9, **caractérisé en ce que** le premier organe de transfert (7) est configuré essentiellement en forme de disque et **en ce que** le contour de commande (14) est disposé du côté frontal aussi près que possible de l'axe de pivotement ou de rotation (11) du premier organe de transfert (7).

11. Ensemble de véhicule automobile selon l'une quelconque des revendications précédentes, **caractérisé en ce que** le deuxième organe de transfert (6) présente au moins une butée (17) qui peut être amenée, pour le fonctionnement de blocage, en prise de blocage avec une contre-butée (20) disposée sur l'élément de blocage (8), de préférence **en ce que** le deuxième organe de transfert (6) est configuré essentiellement en forme de disque et **en ce que** la butée (17) du deuxième organe de transfert (6) est disposée du côté frontal aussi loin que possible à l'extérieur.

12. Ensemble de véhicule automobile selon la revendication 11, **caractérisé en ce qu'**un guide (25) pour la contre-butée (20) de l'élément de blocage (8) est prévu pour recevoir la force de blocage, de préférence **en ce que** le guide (25) est configuré de telle sorte qu'il reçoive essentiellement toute la force de blocage par le biais de la contre-butée (20).

13. Ensemble de véhicule automobile selon l'une quelconque des revendications précédentes, **caractérisé en ce que** le composant réglable est la gâche de porte réglable ou la targette en forme de U réglable ou le pêne de l'assistance de fermeture des portes d'une serrure de porte de véhicule automobile, le levier de verrouillage central du système de verrouillage central d'une serrure de porte de véhicule automobile, le cliquet de verrouillage d'une serrure de porte de véhicule automobile, un élément de commande de la redondance mécanique d'une serrure électrique, un élément d'entraînement d'une porte ou d'un capot de véhicule automobile commandé(e) par moteur ou un élément d'accouplement de l'accouplement entre deux ou plusieurs modules du véhicule automobile.

14. Ensemble de véhicule automobile selon l'une quelconque des revendications 1 à 12, **caractérisé en ce que** le composant réglable (4) est un élément d'entraînement ou de commande d'un lève-glace à moteur ou d'un réglage de siège ou de banquette à moteur.
